# EUROPEAN PATENT SPECIFICATION

(11) **EP 3 098 088 B1**
(45) Date of publication and mention of the grant of the patent: **14.03.2018**
(21) Application number: 15740146.4
(22) Date of filing: 08.01.2015
(51) Int. Cl.: B60C 11/00, B60C 1/00, B60C 9/18, B60C 9/22

(54) **MOTORCYCLE TIRE**
MOTORRADREIFEN
PNEU DE MOTO

(30) Priority: 24.01.2014 JP 2014011014
(43) Date of publication of application: 30.11.2016
(73) Proprietor: Bridgestone Corporation, Tokyo 104-8340 (JP)
(72) Inventor: TAKAHASHI Junichi, Kodaira-shi Tokyo 187-8531 (JP); TAKAHASHI Takeshi, Kodaira-shi Tokyo 187-8531 (JP)
(74) Representative: Oxley, Robin John George
(86) International application number: PCT/JP2015/050347
(87) International publication number: WO 2015/111439

(56) References cited:
- EP-A1- 1 852 277
- EP-A2- 1 878 591
- JP-A- H07 276 913
- JP-A- 2007 331 657
- JP-A- 2007 331 657
- JP-A- 2008 189 040
- JP-A- 2010 023 761

## Description

### [Technical Field]

The present invention relates to a motorcycle tire in which a belt layer and a tread are disposed at a tread section.

Priority is claimed on Japanese Patent Application No. 2014-11014, filed January 24, 2014, the content of which is incorporated herein by reference.

### [Background Art]

As a motorcycle tire of the related art, for example, a tire disclosed in the following Patent Document 1 is known.

### [Document of Related Art]

### [Patent Document]

### [Patent Document 1]

Japanese Unexamined Patent Application, First Publication No. H05-4503
Attention is also drawn to the following documents: EP 1 852 277 A1,
EP 1 878 591 A2 and JP 2007 331657 A.

### [Summary of Invention]

### [Technical Problem]

In a tread section of the motorcycle tire of the related art, a belt layer configured by winding steel cords coated with rubber in a spiral shape and a tread provided outside in a radial direction of the belt layer and formed of rubber are disposed. Here, since the steel cords in the belt layer have stiffness greater than a tensile force and a compressive force, even when a large lateral force is applied to the tire upon turning, the steel cords can endure the lateral force, and exhibit high turning performance.

### [Solution to Problem]

However, even though the above-mentioned tire has a small crown radius, grounding deformation and radial growth of the tread section are suppressed by the belt layer in which the steel cords having high stiffness are embedded. For this reason, only a center section is grounded upon straight travel. As a result, the rubber of the center section may be abraded relatively quickly, which decreases abrasion resistance. In order to improve the abrasion resistance in the center section as described above, for example, increasing a rubber gage of the tread may be considered. However, as a result, since a thick tread is largely deformed by a lateral force upon turning, turning performance is decreased. In the above-mentioned technique, since improvement and deterioration of the turning performance and improvement and deterioration of the abrasion resistance are mutually offset, it is difficult to improve both the turning performance and the abrasion resistance, and both cannot be sufficiently improved together.

The present invention is directed to provide a motorcycle tire capable of improving turning performance and abrasion resistance in a center section.

The above-mentioned object can be accomplished by providing a motorcycle tire having a tread section in which a belt layer configured by winding a reinforcement cord coated with rubber in a spiral shape and a tread formed outside in a radial direction of the belt layer and formed of rubber are disposed, wherein the reinforcement cord of the belt layer is constituted by a cord having a tensile force of 15 N upon 1 % elongation, the tread is divided into a center section including at least a tire equatorial plane and a pair of shoulder sections including tread ends, and a value of tanδ of the rubber in the shoulder sections is larger than a value of tanδ of the rubber in the center section.

### [Effects of Invention]

According to the present invention, since the reinforcement cord of the belt layer is constituted by the cord having the low modulus of elasticity in which a tensile force upon 1% elongation is 15 N or less, the belt layer can be relatively easily elongated in a circumferential direction. As a result, a shearing force of the tread is decreased. Here, frictional energy of the tread can be obtained by a product of the shearing force and slippage on a road surface upon kicking. When the shearing force is decreased as described above, since the frictional energy is decreased, abrasion resistance of the tread, and of course abrasion resistance in the center section, can also be improved. Here, when the reinforcement cord of the belt layer is constituted by the cord having the low modulus of elasticity as described above, a shearing force in a lateral direction is also decreased. For this reason, in general, a lateral force upon turning travel is decreased, and turning performance is decreased. However, when the reinforcement cord of the belt layer is constituted by the cord having the low modulus of elasticity as described above, out-of-plane stiffness of the belt layer is decreased. As a result, a length of ground contact between the shoulder sections and the road surface upon turning travel is increased (eventually, a ground contact area is increased), and a decrease in the above-mentioned turning performance can be prevented.

In addition, according to the present invention, the value of tanδ of the rubber in the shoulder sections is larger than the value of tanδ of the rubber in the center section. Since the rubber having tanδ of a large value generally has a value having a large grip force in this way, a grip limit in the shoulder sections grounded upon turning is increased, and the turning performance can be easily improved. Here, the rubber in the center section has tanδ of a small value. Since such rubber generally has a modulus of a large value, a decrease in abrasion resistance in the center section can be easily prevented. In this way, the turning performance in the shoulder sections and the abrasion resistance in the center section are not offset. For this reason, both of the turning performance and the abrasion resistance of the tire can be securely and easily improved.

In addition, according to the present invention, wear and fracture characteristics of the rubber in the center section are increased. As a result, the abrasion resistance in the center section can be further improved. Here, since the rubber having a 300% modulus of a large value has high out-of-plane stiffness as described above, ride comfort of the tire is considered to be decreased. However, when the reinforcement cord of the belt layer is constituted by the cord having the low modulus of elasticity as described above, the out-of-plane stiffness of the belt layer is decreased. As a result, the out-of-plane stiffness can be offset and the ride comfort can be maintained.

Further, according to the present invention, a large variation in performance in the width direction of the tread section can be suppressed, and smooth turning becomes possible. In addition, according to the present invention, even when turning travel frequently occurs as in circuit travel or the like, the abrasion (surface deterioration or the like) of the shoulder sections can be effectively suppressed. Further, there is need for improvement in wet performance in the shoulder sections to prevent overturning when turning travel is performed on a wet road surface, and according to the present invention, the wet performance of the shoulder section in contact with the road surface upon turning can be improved and safe travel can be secured.

### [Brief Description of Drawings]

Fig. 1 is a sectional view of a tire meridian showing a first embodiment of the present invention.
Fig. 2 is a sectional view of a tire meridian showing a second embodiment of the present invention.

### [Description of Embodiments]

Hereinafter, a first embodiment of the present invention will be described with reference to the accompanying drawings.

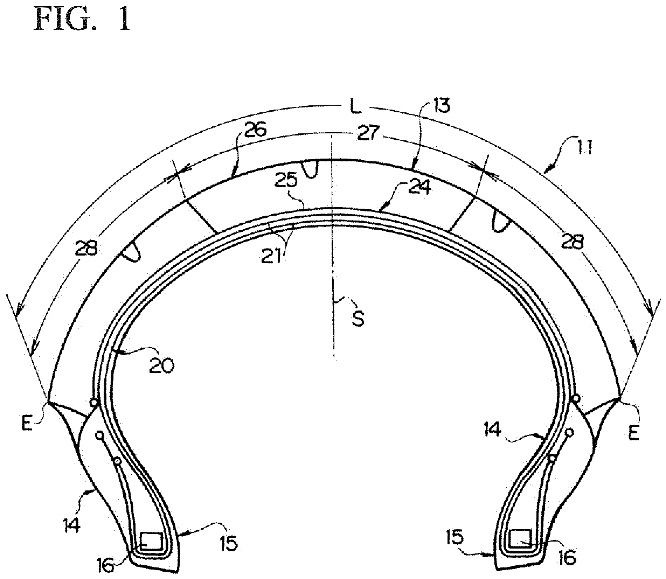

In Fig. 1, reference numeral 11 designates a pneumatic tire for a motorcycle that is applied to high speed travel. The tire 11 includes a tread section 13 smoothly curved outward in a radial direction in a convex shape while a meridian cross section shows substantially an arc shape, a pair of sidewall sections 14 extending inward in a substantially radial direction from both ends in a width direction of the tread section 13, and a pair of bead sections 15 continued to inner ends in the radial direction of the sidewall sections 14 and in which bead cores 16 are embedded, and is formed such that a width between both tread ends E becomes a tire maximum width. Here, the above-mentioned tread ends E are abruptly bent sections (edges) disposed at boundaries between the tread section 13 and the sidewall sections 14.

In addition, the tire 11 has a carcass layer 20 extending in a toroidal shape between the pair of bead cores 16 and configured to reinforce the sidewall sections 14 and the tread section 13. Both end portions of the carcass layer 20 are folded back around the bead cores 16 from the inside toward the outside to be locked by the bead cores 16. The carcass layer 20 is constituted by at least one, here two, carcass plies 21, and the carcass plies 21 are configured by coating a plurality of cords that cross each other with a cord angle of 60 to 90 degrees with respect to a tire equatorial plane S with coating rubber. Then, when the cord angle is less than 90 degrees, these cords are inclined in opposite directions with respect to the tire equatorial plane S in the two carcass plies 21 to cross each other. In addition, while nylon is used as the cords, organic fibers such as rayon, polyester, or the like, may be used. Further, the above-mentioned tire equatorial plane S is a plane perpendicular to an axis of the tire 11 including the entire circumference of the tread center.

Reference numeral 24 designates a belt layer disposed at the tread section 13 outside in the radial direction of the carcass layer 20, and the belt layer 24 is constituted by a sheet of circumferential ply 25. Then, a width in the meridian direction of the belt layer 24 is preferably 0.8 to 1.1 times a meridian periphery length L of a tread 26 (to be described below). The circumferential ply 25 is configured by winding a strip obtained by coating one or a plurality of reinforcement cords with coating rubber substantially along the tire equatorial plane S in a spiral shape. As a result, the reinforcement cord embedded in the circumferential ply 25 extends substantially in parallel in the tire equatorial plane S and exhibits a strong hoop effect. Accordingly, a variation in radial growth and a ground contact shape of the tread section 13 due to a centrifugal force upon high speed travel is strongly suppressed, and controllability and high speed durability upon straight travel are improved. Here, when the circumferential ply 25 is configured by winding the strips a plurality of times in a spiral shape as described above, the circumferential ply 25 can be simply and inexpensively manufactured. In addition, while inexpensive steel having good durability is preferably used as the above-mentioned reinforcement cord, an aromatic polyamide may be used.

Reference numeral 26 is a tread disposed at the tread section 13 further outside in the radial direction than the belt layer 24 and formed of vulcanized rubber as a whole. The tread 26 is totally divided into three sections, i.e., a center section 27 including the tire equatorial plane S at a center in the tire width direction, and a pair of shoulder sections 28 connected to both outsides in the tire width direction of the center section 27 and including the tread ends E at outer sides in the tire width direction. Here, when air is filled in a tire mounted on an application rim prescribed in the following standard corresponding to a tire size to a prescribed air pressure corresponding to a maximum load capability and a meridian width of a tread grounding area upon application of the maximum load capability at a camber angle of 0 degrees with respect to a road surface is M, a meridian width of the center section 27 is preferably within a range of 70 to 130% of the meridian width M of the tread grounding area. Further, the air may be substituted with an inert gas such as nitrogen gas or the like.

The standard is an industrial standard effective in a region in which the tire is produced or used, and for example, the corresponding standard is "Year Book" of the Tire and Rim Association Inc. in the US, "Standards Manual" of the European Tire and Rim Technical Organization in Europe, and "JATMA Year Book" of the Japanese Automobile Tire Association in Japan. Meanwhile, a meridian width of the shoulder sections 28 is 1/2 of a value obtained by subtracting the meridian width of the center section 27 from the meridian periphery length L of the tread 26. Here, the meridian periphery length L of the tread 26 is a length obtained by measuring a distance between the tread ends E in a tire meridian direction in an outer circumferential direction of the tread 26 in a state in which the tire assembled to the application rim is filled with the air to the prescribed air pressure.

In addition, in the embodiment, the reinforcement cords that constitute the belt layer 24 are constituted by cords having a low modulus of elasticity, i.e., cords in which a tensile force A upon 1% elongation derived from the following test result is 15 N or less. Here, the above-mentioned tensile force A is a value obtained by pulling both ends of a reinforcement cord serving as a target in opposite directions and measuring a load (a tensile force) upon generation of 1% elongation in the reinforcement cord. The above-mentioned reinforcement cord having a low modulus of elasticity may be, for example, a reinforcement cord constituted by the reduced number of filaments, having a small filament diameter, and constituted by a plurality of filaments bound in a spiral shape at the same pitch without twisting. In addition, when the tensile force A is less than 5 N, since a hoop effect due to the belt layer 24 is decreased and thus controllability and high speed durability are decreased, the tensile force A is preferably 5 N or more. Further, the tensile force A upon 1% elongation in the reinforcement cord of the belt layer 24 widely used in the related art is about 25 N.

As described above, provided that each of the reinforcement cords of the belt layer 24 is constituted by a cord having a low modulus of elasticity in which the tensile force A upon 1% elongation is 15 N or less, the reinforcement cord can be relatively easily elongated in the circumferential direction of the tire 11 when a force in the circumferential direction is applied to the tire 11. As a result, a shearing force in the circumferential direction of the tread 26 is decreased. Here, frictional energy of the tread 26 can be obtained as a product of the shearing force and slippage of the tread 26 on a road surface upon kicking. Accordingly, when the shearing force is decreased as described above, since a value of frictional energy is reduced, the abrasion resistance of the tread 26, and of course the abrasion resistance in the center section 27, can be improved. In addition, as described above, when the reinforcement cord of the belt layer 24 is constituted by a cord having a low modulus of elasticity, the shearing force in the lateral direction of the tread 26 is also decreased. For this reason, it is generally considered that the lateral force in the shoulder sections 28 that are grounded when the motorcycle is inclined and turned is decreased, and the turning performance is decreased.

However, when the reinforcement cord of the belt layer 24 is constituted by the cord having a low modulus of elasticity as described above, out-of-plane stiffness of the belt layer 24 is decreased. For this reason, a length of ground contact between the shoulder sections 28 and the road surface upon turning is increased (a ground contact area is increased), and a decrease in the above-mentioned turning performance can be prevented. Then, an increase in the above-mentioned ground contact area is more clearly exhibited in the tire 11 having a large radius of curvature than the tire 11 having a small radius of curvature of the crown radius. Further, as the reinforcement cords that constitute the belt layer 24, a cord having a tensile force of 150 N or less upon 3% elongation is preferably used. This is because, when the tensile force upon 3% elongation is the cord of the above-mentioned value, the above-mentioned effect can be expected even when a remarkably large force is applied to the tire 11.

In addition, in the embodiment, a value of tanδ (a loss factor) of the rubber in the shoulder sections 28 is larger than a value of tanδ of the rubber in the center section 27. Here, the above-mentioned tanδ is a value obtained by measuring the modulus of elasticity under conditions of a temperature of 30 °C, strain amplitude of 1%, a frequency of 52 Hz pursuant to Japanese Industrial Standard JIS K7198 and eliminating a dynamic loss modulus of elasticity from a dynamic storage modulus of elasticity. Here, the rubber having tanδ of a large value is generally a value having a large grip force. For this reason, when the value of tanδ of the rubber in the shoulder sections 28 is larger than the value of tanδ of the rubber in the center section 27 as described above, a grip limit in the shoulder sections 28 that are grounded upon turning is increased, and the turning performance can be easily improved. Here, the rubber in the center section 27 has tanδ of a small value. Since such rubber has a modulus of a large value in general, a decrease in abrasion resistance of the center section 27 can be easily prevented.

When the reinforcement cord of the belt layer 24 is constituted by the cord having a low modulus of elasticity in this way, the abrasion resistance in the center section 27 can be improved while preventing a decrease in turning performance in the shoulder sections 28. Meanwhile, when the value of tanδ of the rubber in the shoulder sections 28 is larger than the value of tanδ of the rubber in the center section 27, the turning performance in the shoulder sections 28 can be improved while preventing a decrease in abrasion resistance in the center section 27. In this way, when the above-mentioned two techniques are applied together, the turning performance in the shoulder sections 28 and the abrasion resistance in the center section 27 are not offset. As a result, both of the turning performance in the shoulder sections 28 and the abrasion resistance in the center section 27 can be reliably and easily improved.

In addition, in the embodiment, a value (a unit is MPa) of a 300% modulus of the rubber in the center section 27 is preferably larger than a value of a 300% modulus of the rubber in the shoulder sections 28. Here, the above-mentioned 300% modulus value is a stress value measured when a tensile test of Japanese Industrial Standard JIS Dumbbell Form No. 3 Sample is performed at 30 °C pursuant to Japanese Industrial Standard JIS K6251. Then, when the 300% modulus value of the center section 27 is larger than the 300% modulus value of the shoulder sections 28 as described above, rubber hardness of the center section 27 can be increased, and wear resistance and fracture resistance of the rubber in the center section 27 can be increased. Accordingly, the abrasion resistance in the center section 27 can be further improved. Here, the rubber having a 300% modulus of a large value as described above has high out-of-plane stiffness. For this reason, ride comfort of the tire 11 is considered to be decreased. However, since the reinforcement cord of the belt layer 24 is constituted by the cord having a low modulus of elasticity as described above, out-of-plane stiffness of the belt layer 24 is decreased. As a result, values of the out-of-plane stiffness are offset with respect to each other, and ride comfort can be maintained.

Further, when silica serving as a filler is mixed in the tread 26 of the above-mentioned tire 11, a mixing proportion (parts by weight) of the silica in the shoulder sections 28 is preferably larger than a mixing proportion of the silica in the center section 27. This is because wet performance upon turning should be improved to prevent overturning when the tire 11 travels on a wet road surface. However, according to the above-mentioned mixing proportion, wet performance of the shoulder sections 28 in contact with a road surface upon turning can be improved. Accordingly, safe travelling can be secured.

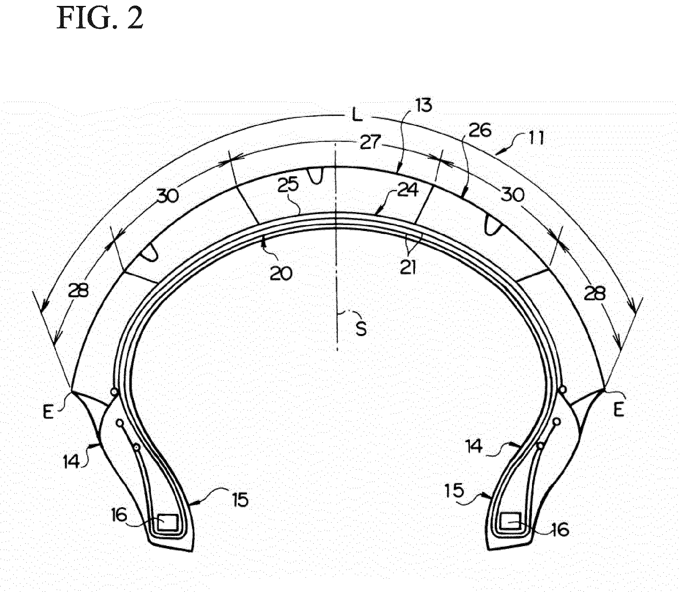

Fig. 2 is a view showing a second embodiment of the present invention. In the embodiment, a pair of intermediate portions 30 having inner and outer ends in the width direction and that continue to the center section 27 and the shoulder sections 28 are disposed at the tread section 13 between the center section 27 and the shoulder sections 28, in other words, at both outer sides in the tire width direction of the center section 27 inside in the tire width direction of the shoulder sections 28. As a result, the tread 26 is totally divided into five areas. Here, a meridian width of the center section 27 in the tread 26 is the same as described above. Meanwhile, the meridian width of the shoulder sections 28 is preferably within a range of 5 to 35% of the meridian periphery length L and the meridian width of the intermediate portions 30 is preferably within a range of 10 to 40% of the meridian periphery length L. In addition, the value of tanδ of the rubber in the intermediate portions 30 is smaller than the value of tanδ of the rubber in the shoulder sections 28 and larger than the value of tanδ of the rubber in the center section 27, and the value of tanδ in the tread 26 is preferably increased slowly (gradually) from the tire equatorial plane S toward both of the tread ends E. As a result, a large variation in performance in the width direction of the tread section 13, in particular, a variation in turning performance, can be suppressed, and smooth turning of the motorcycle becomes possible.

Meanwhile, in relation with the 300% modulus value, when the intermediate portions 30 are disposed between the center section 27 and the shoulder sections 28, the value of the 300% modulus of the rubber in the intermediate portions 30 is smaller than the value of the 300% modulus of the rubber in the center section 27 and also smaller than the value of the 300% modulus of the rubber in the shoulder sections 28. Accordingly, the value of the 300% modulus in the tread 26 preferably has relations of large, small and medium from the tire equatorial plane S toward both of the tread ends E. As a result, even when turning travel frequently occurs as in circuit travel or the like, as the intermediate portions 30 are previously abraded, abrasion (surface deterioration or the like) of the shoulder sections 28 can be effectively suppressed. Further, when the intermediate portions 30 are disposed between the center section 27 and the shoulder sections 28 as described in the second embodiment, a mixing proportion of the silica in the intermediate portions 30 is preferably larger than a mixing proportion in the center section 27 and smaller than a mixing proportion in the shoulder sections 28. As a result, appropriate turning performance can be maintained without causing a large variation in turning performance on a wet road surface. Further, since other configurations and actions are the same as those of the first embodiment, description thereof will be omitted.

Next, a first test example will be described. In this test, a comparative tire 1 having a belt layer in which reinforcement cords having a tensile force A of 25 N upon 1% elongation are embedded, a comparative tire 2 having a belt layer in which reinforcement cords having a tensile force A of 18 N are embedded, an example tire 1 having a belt layer in which reinforcement cords having a tensile force A of 15 N are embedded, an example tire 2 having a belt layer in which reinforcement cords having a tensile force A of 12 N are embedded, and an example tire 3 having a belt layer in which reinforcement cords having a tensile force A of 10 N are embedded were prepared.

Here, all of the treads of the tires were divided into the center section and the shoulder sections. In that case, values of tanδ and the 300% modulus in the center section were 0.3 and 10 (MPa), respectively, and values of tanδ and the 300% modulus in the shoulder sections were 0.5 and 8, respectively. In addition, a tire size was 190/55ZR17. Next, after the tire was mounted on a rim of 6.0×17 and filled with air to an internal pressure of 290 kPa, the tire was mounted on a rear wheel of a motorcycle to travel 2500 km on a general public road, a tread groove depth at the center section after travel was measured to obtain an abrasion amount in the center section, and thus an abrasion resistance test was performed. As a result, provided that the comparative tire 1 is an index of 100, the comparative tire 2 was 100, the example tire 1 was 104, the example tire 2 was 104, and the example tire 3 was 105. Here, a higher numerical value of the index indicates a lower abrasion amount and better abrasion resistance. Then, as can be clearly seen from this result, when the tensile force A upon 1 % elongation is about 15 N or less, the abrasion resistance in the center section is largely improved. Further, while the same abrasion resistance test was performed on the tire having the intermediate portions formed between the center section and the shoulder sections, the result has the same tendency as the above-mentioned result.

Next, a second test example will be described. In the test, a tire 1 of the related art, the above-mentioned example tire 2, a tire 2 of the related art having intermediate portions formed between the center section and the shoulder sections of the tire 1 of the related art, an example tire 4 having intermediate portions formed between the center section and the shoulder sections of the example tire 2, and a comparative tire 3 having a relation between tanδ and the 300% modulus in each section of the example tire 4 different from the present invention were prepared. Here, values of tanδ of the center section, the intermediate portions and the shoulder sections in the tires are represented in Table 1. In Table 1, the center sections, the intermediate portions and the shoulder sections are represented as a, b and c, respectively. In addition, Table 1 also represents values of the 300% modulus in the center sections, the intermediate portions and the shoulder sections of the tires. In Table 1, the center sections, the intermediate portions and the shoulder sections are represented as d, e and f, respectively. Here, the size of the tires was 190/55ZR17.

**[Table 1]**

| | Tensile force | Number of divided treads | tanδ | | | 300% modulus | | | Turning stability | Abrasion resistance |
|---|---|---|---|---|---|---|---|---|---|---|
| | | | a | **b** | c | d | e | f | | |
| Tire 1 of related art | 25 | 3 | 0.4 | - | 0.4 | 10 | - | 8 | 100 | 100 |
| Example tire 2 | 12 | 3 | 0.3 | - | 0.5 | 10 | - | 8 | 103 | 112 |
| Tire 2 of related art | 25 | 5 | 0.4 | 0.4 | 0.4 | 10 | 8 | 8 | 105 | 100 |
| Example tire 4 | 12 | 5 | 0.3 | 0.4 | 0.5 | 10 | 7 | 8 | 108 | 112 |
| Comparativ e tire 3 | 12 | 5 | 0.4 | 0.4 | 0.4 | 9 | 8 | 9 | 102 | 102 |

Next, after the above-mentioned tires were mounted on the rims of 6.0×17 and filled with air to an internal pressure of 290 kPa, the tires traveled on a test course in a state in which the tires were mounted on the rear wheels of motorcycles, and a test driver's feeling upon high speed turning was estimated as turning stability. Then, provided that the tire 1 of the related art is an index 100, the turning stabilities of the tires were as represented in Table 1. A higher numerical value indicates better turning stability. In addition, the abrasion resistance tests of the above-mentioned tires were performed under the same conditions as the test example 1. As can be clearly seen from Table 1, when the values of the tensile force A, the tanδ and the 300% modulus have relations like in the present invention, both of the abrasion resistance and the turning stability can be improved together.

### [Industrial Applicability]

According to the present invention, the motorcycle tire in which the belt layer and the tread are disposed at the tread section can be applied in an industrial field. According to the present invention, both of the turning performance and the abrasion resistance in the center section can be improved together.

### [Reference Signs List]

13 Tread section
24 Belt layer
26 Tread
27 Center section
28 Shoulder section
30 Intermediate portion
S Tire equatorial plane
E Tread end

## Claims

1. A motorcycle tire (11) having a tread section (13) in which a belt layer (24) configured by winding a reinforcement cord coated with rubber in a spiral shape and a tread (26) formed outside in a radial direction of the belt layer (24) and formed of rubber are disposed, wherein the reinforcement cord of the belt layer (24) is constituted by a cord having a tensile force of 15 N or less upon 1% elongation, the tread (26) is divided into a center section (27) comprising at least a tire equatorial plane (S) and a pair of shoulder sections (28) comprising tread ends (E), and a value of tanδ of the rubber in the shoulder sections (28) is larger than a value of tanδ of the rubber in the center section (27).

2. The motorcycle tire (11) according to claim 1, wherein a value of a 300% modulus of the rubber in the center section (27) is larger than a value of a 300% modulus of the rubber in the shoulder sections (28).

3. The motorcycle tire (11) according to claim 1, wherein a pair of intermediate portions (30) are disposed at the tread section (13) between the center section (27) and the shoulder sections (28), and a value of tanδ of the rubber in the intermediate portions (30) is smaller than the value of tanδ of the rubber in the shoulder sections (28) and larger than the value of tanδ of the rubber in the center section (27).

4. The motorcycle tire (11) according to claim 1, wherein a pair of intermediate portions (30) are disposed at the tread section (13) between the center section (27) and the shoulder sections (28), and a value of a 300% modulus of the rubber in the intermediate portions (30) is smaller than a value of a 300% modulus of the rubber in the shoulder sections (28).

5. The motorcycle tire (11) according to claim 1, wherein silica serving as a filler is mixed in the tread (26), and a mixing proportion of the silica in the shoulder sections (28) is larger than a mixing proportion of the silica in the center section (27).

6. The motorcycle tire (11) according to claim 2, wherein a pair of intermediate portions (30) are disposed at the tread section (13) between the center section (27) and the shoulder sections (28), and a value of tanδ of the rubber in the intermediate portions (30) is smaller than the value of tanδ of the rubber in the shoulder sections (28) and larger than the value of tanδ of the rubber in the center section (27).

7. The motorcycle tire (11) according to claim 2, wherein a pair of intermediate portions (30) are disposed at the tread section (13) between the center section (27) and the shoulder sections (28), and a value of a 300% modulus of the rubber in the intermediate portions (30) is smaller than a value of a 300% modulus of the rubber in the shoulder sections (28).

8. The motorcycle tire (11) according to claim 2, wherein silica serving as a filler is mixed in the tread (26), and a mixing proportion of the silica in the shoulder sections (28) is larger than a mixing proportion of the silica in the center section (27).

## Patentansprüche

1. Motorradreifen (11) aufweisend einen Laufflächenabschnitt (13), in welchem eine Gürtelschicht (24), welche durch spiralförmiges Aufwickeln eines mit Gummi beschichteten Verstärkungskords und eine Lauffläche (26) angeordnet ist, welche auf der Außenseite in einer Radialrichtung der Gürtelschicht (24) und aus Gummi gebildet ist, wobei der Verstärkungskord der Gürtelschicht (24) aus einem Kord mit einer Zugkraft von 15 N oder weniger bei 1% Ausdehnung besteht, wobei die Lauffläche (26) in einen Mittelabschnitt (27), umfassend zumindest eine Reifenäquatorialebene (S) und ein Paar Laufflächenenden (E) umfassenden Schulterabschnitten (28), aufgeteilt ist, und der Wert von tanδ des Gummis in den Schulterabschnitten (28) größer als der Wert von tanδ des Gummis im Mittelabschnitt (27) ist.

2. Motorradreifen (11) nach Anspruch 1, wobei der Wert eines 300%-Moduls des Gummis im Mittelabschnitt (27) größer als der Wert eines 300%-Moduls des Gummis in den Schulterabschnitten (28) ist.

3. Motorradreifen (11) nach Anspruch 1, wobei ein Paar von Zwischenabschnitten (30) am Laufflächenabschnitt (13) zwischen dem Mittelabschnitt (27) und den Schulterabschnitten (28) angeordnet ist, und der Wert von tanδ des Gummis in den Zwischenabschnitten (30) kleiner als der Wert von tanδ des Gummis in den Schulterabschnitten (28) und größer als der Wert von tanδ des Gummis im Mittelabschnitt (27) ist.

4. Motorradreifen (11) nach Anspruch 1, wobei ein Paar von Zwischenabschnitten (30) am Laufflächenabschnitt (13) zwischen dem Mittelabschnitt (27) und den Schulterabschnitten (28) angeordnet ist, und der Wert eines 300%-Moduls des Gummis in den Zwischenabschnitten (30) kleiner als der Wert eines 300%-Moduls des Gummis in den Schulterabschnitten (28) ist.

5. Motorradreifen (11) nach Anspruch 1, wobei als Füllstoff verwendete Kieselsäure in der Lauffläche (26) gemischt ist, und das Mischverhältnis der Kieselsäure in den Schulterabschnitten (28) größer als das Mischverhältnis der Kieselsäure im Mittelabschnitt (27) ist.

6. Motorradreifen (11) nach Anspruch 2, wobei ein Paar von Zwischenabschnitten (30) am am Laufflächenabschnitt (13) zwischen dem Mittelabschnitt (27) und den Schulterabschnitten (28) angeordnet ist, und der Wert von tanδ des Gummis in den Zwischenabschnitten (30) kleiner als der Wert von tanδ des Gummis in den Schulterabschnitten (28) und größer als der Wert von tanδ des Gummis im Mittelabschnitt (27) ist.

7. Motorradreifen (11) nach Anspruch 2, wobei ein Paar von Zwischenabschnitten (30) am Laufflächenabschnitt (13) zwischen dem Mittelabschnitt (27) und den Schulterabschnitten (28) angeordnet ist, und der Wert eines 300%-Moduls des Gummis in den Zwischenabschnitten (30) kleiner als der Wert eines 300%-Moduls des Gummis in den Schulterabschnitten (28) ist.

8. Motorradreifen (11) nach Anspruch 2, wobei als Füllstoff verwendete Kieselsäure in der Lauffläche (26) gemischt ist, und das Mischverhältnis der Kieselsäure in den Schulterabschnitten (28) größer als das Mischverhältnis der Kieselsäure im Mittelabschnitt (27) ist.

## Revendications

1. Pneu de moto (11) présentant une section bande de roulement (13) dans lequel sont agencées une couche de ceinture (24), configurée grâce à une étape consistant à enrouler en forme de spirale un câblé de renfort revêtu de caoutchouc, et une bande de roulement (26) formée à l'extérieur dans une direction radiale de la couche de ceinture (24) et formée de caoutchouc, dans lequel le câblé de renfort de la couche de ceinture (24) est constitué d'un câblé présentant une résistance à la traction inférieure ou égale à 15 N lors d'un allongement de 1 %, la bande de roulement (26) est divisée en une section centrale (27) comprenant au moins un plan équatorial de pneu (S) et une paire de sections épaulement (28) comprenant des extrémités de bande de roulement (E), et une valeur de tanδ du caoutchouc dans les sections épaulement (28) est supérieure une valeur de tanδ du caoutchouc dans la section centrale (27).

2. Pneu de moto (11) selon la revendication 1, dans lequel une valeur d'un module à 300 % du caoutchouc dans la section centrale (27) est supérieure à une valeur d'un module à 300 % du caoutchouc dans les sections épaulement (28).

3. Pneu de moto (11) selon la revendication 1, dans lequel une paire de parties intermédiaires (30) sont agencées au niveau de la section bande de roulement (13) entre la section centrale (27) et les sections épaulement (28), et une valeur de tanδ du caoutchouc dans les parties intermédiaires (30) est inférieure à la valeur de tanδ du caoutchouc dans les sections épaulement (28) et est supérieure à la valeur de tanδ du caoutchouc dans la section centrale (27).

4. Pneu de moto (11) selon la revendication 1, dans lequel une paire de parties intermédiaires (30) sont agencées au niveau de la section bande de roulement (13) entre la section centrale (27) et les sections épaulement (28), et une valeur d'un module à 300 % du caoutchouc dans les parties intermédiaires (30) est inférieure à une valeur d'un module à 300 % du caoutchouc dans les sections épaulement (28).

5. Pneu de moto (11) selon la revendication 1, dans lequel de la silice servant de charge est mélangée dans la bande de roulement (26), et une proportion de mélange de la silice dans les sections épaulement (28) est supérieure à une proportion de mélange de la silice dans la section centrale (27).

6. Pneu de moto (11) selon la revendication 2, dans lequel une paire de parties intermédiaires (30) sont agencées au niveau de la section bande de roulement (13) entre la section centrale (27) et les sections épaulement (28), et une valeur de tanδ du caoutchouc dans les parties intermédiaires (30) est inférieure à la valeur de tanδ du caoutchouc dans les sections épaulement (28) et est supérieure à la valeur de tanδ du caoutchouc dans la section centrale (27).

7. Pneu de moto (11) selon la revendication 2, dans lequel une paire de parties intermédiaires (30) sont agencées au niveau de la section bande de roulement (13) entre la section centrale (27) et les sections épaulement (28), et une valeur d'un module à 300 % du caoutchouc dans les parties intermédiaires (30) est inférieure à une valeur d'un module à 300 % du caoutchouc dans les sections épaulement (28).

8. Pneu de moto (11) selon la revendication 2, dans lequel de la silice servant de charge est mélangée dans la bande de roulement (26), et une proportion de mélange de la silice dans les sections épaulement (28) est supérieure à une proportion de mélange de la silice dans la section centrale (27).
